# EUROPÄISCHE PATENTSCHRIFT

(11) **EP 1 185 190 B1**
(45) Veröffentlichungstag und Bekanntmachung des Hinweises auf die Patenterteilung: **06.11.2002**
(21) Anmeldenummer: 00935205.5
(22) Anmeldetag: 13.06.2000
(51) Int. Cl.: A47J 39/02

(54) **SYSTEMTRÄGER, INSBESONDERE MEHRFACHSYSTEMTRÄGER**
SYSTEM CARRIER, ESPECIALLY A MULTIPLE SYSTEM CARRIER
PORTEUR DE SYSTEME, NOTAMMENT PORTEUR DE SYSTEME MULTIPLE

(30) Priorität: 16.06.1999 DE 29910565 U
(43) Veröffentlichungstag der Anmeldung: 13.03.2002
(73) Patentinhaber: Eisfink Max Maier GmbH & Co. KG, 71636 LUDWIGSBURG (DE)
(72) Erfinder: MAIER, Max, D-71636 Ludwigsburg (DE)
(74) Vertreter: Menges, Rolf, Dipl.-Ing.
(86) Internationale Anmeldenummer: EP0005421
(87) Internationale Veröffentlichungsnummer: WO00076383

(56) Entgegenhaltungen:
- EP-A- 0 663 173
- DE-U- 29 701 618
- DE-U- 29 722 573
- US-A- 5 189 281

## Beschreibung

### TECHNISCHES GEBIET

Die Erfindung betrifft einen Systemträger der im Oberbegriff des Anspruchs 1 angegebenen Art. Insbesondere betrifft die Erfindung einen aus mehreren gleichen Systemträgern dieser Art aufgebauten Mehrfachsystemträger.

### STAND DER TECHNIK

Aus dem DE 297 22 573 U1 ist ein Kochzentrum mit Warm- und/oder Kaltausgabe bekannt, das einen tischartigen Geräteträger aufweist, der aus mehreren gleich ausgebildeten Trägereinheiten zusammengefügt ist. Eine solche Trägereinheit entspricht dem Systemträger der eingangs genannten Art. Für das bekannte Kochzentrum ist ein System von Elektrogeräten in Form von Koch-, Warmhalte- oder Kühlgeräten vorgesehen, die mit den Abmessungen eines GN-Behälters entsprechenden Außenabmessungen versehen sind und sich statt eines GN-Behälters und/oder eines für denselben vorgesehenen elektrischen Warmhaltegerätes (z.B. einer elektrischen Heizplatte) in den tischartigen Geräteträger einsetzen oder einschieben lassen. Die genormten Abmessungen von solchen Behältern ergeben sich aus DIN EN 631 oder DIN 66075. Statt eines Warmhaltegerätes oder zusätzlich zu einem Warmhaltegerät kann ein Kühlgerät vorgesehen werden. Ganz allgemein lassen sich die genannten Elektrogeräte in dem Geräteträger beliebig miteinander kombinieren. Sie können mit wenigen Handgriffen in den Geräteträger eingesetzt oder aus diesem entfernt werden, so daß dieser lediglich die Geräte zu enthalten braucht, die für die jeweilige Arbeitsplatzsituation gerade benötigt werden. Das bekannte Kochzentrum bietet somit Flexibilität und Einfachheit. Es kann vor allem in den Speisenausgabebereichen der Großverpflegung eingesetzt werden, ist aber ebenso für Küche und Snackbar geeignet. Mit ihm kann ein optimaler Arbeitsplatz für den Koch im Front-Cooking oder in der Küche geschaffen werden, wo er die Geräte an beliebiger Stelle auch platzsparend aufbewahren kann, um sie je nach Bedarf zu holen und in den Geräteträger einzuschieben. Die Geräte selbst haben jeweils ein Anschlußkabel mit einem Stecker. Die Einzelsystemträger sind am Boden ausgespart oder offen, so daß das Anschlußkabel unter den Geräteträger geführt und an eine dort vorgesehene Elektroinstallation angeschlossen werden kann. Bei dem bekannten Kochzentrum ist unter dem Geräteträger ein Unterbau vorgesehen, in welchem eine Elektrounterverteilung für die Steckdosen vorgesehen ist.

Bei dem Einsatz des bekannten Kochzentrums hat es sich gezeigt, daß die Kabel unter dem tischartigen Geräteträger häufig im Weg sind, weil der Raum z.B. zur Unterbringung von Koch- oder Küchenutensilien genutzt werden soll. Außerdem ist es für den Koch mühsam, bei dem Einschieben des Elektrogerätes jeweils das Kabel durch den Boden des Systemträgers hindurchzuführen, um dann unter den Geräteträger zu tauchen und den Stecker in die Steckdose zu stecken. Außerdem schränkt die Elektroverteilung in dem Unterbau den Koch in der Unterbringungsmöglichkeit seiner Utensilien weiter ein und wird um so aufwendiger, je mehr Systemträger miteinander kombiniert werden und somit entsprechend mehr Steckdosen vorzusehen sind.

Ähnliche Probleme ergeben sich, wenn das bekannte Kochzentrum als ein Kochmobil ausgeführt ist, wie es aus dem Sonderdruck der Zeitschrift gv-praxis 9/98 bekannt ist. Dieses Kochmobil hat nur einen kleinen Unterbau mit dem für die Elektrogeräte erforderlichen Steckdosen. Wie bei dem bekannten Kochzentrum werden die Arischlußkabel der Elektrogeräte durch die unten offenen Systemträger nach unten geführt und mittels Stecker an die Steckdosen angeschlossen. Die gesamte Elektroinstallation ist in dem Unterbau untergebracht und durch eine gewendelte flexible Anschlußleitung mittels Stecker an das Stromnetz anschließbar. Der Unterbau mit der darin untergebrachten Elektroinstallation beansprucht bei dem Kochmobil zwar weniger Platz als bei dem bekannten Kochzentrum, der Koch muß jedoch ebenfalls unter den Tisch tauchen, um zum Anschließen und Abtrennen der Elektrogeräte Stecker und Steckdosen zu verbinden bzw. zu trennen.

Bei einem aus der US 5 189 281 A bekannten System (vgl. Oberbegriff des Anspruchs 1) ist das, was in vorliegender Anmeldung als Systemträger bezeichnet ist, ein Speisenverteilwagen, der zum Aufwärmen und Warmhalten von Speisen bis zum Ausgabeort dient. Die Speisen sind portionsweise auf Tabletts angeordnet, welche in dem Wagen auf Tragschienen mit angesteckten Heizplatten wahlweise so platziert werden können, daß die Speisenportionen dabei über den Heizplatten angeordnet werden. Die Tragschienen können in verschiedenen Höhen in den Wagen eingeschoben werden, wobei sie über erste Steckstifte mit einer an dem Wagen vorgesehenen ersten elektrischen Steckvorrichtung verbunden werden. Die Tragschienen selbst weisen zweite elektrische Steckvorrichtungen auf, in die die Heizplatten mit zweiten Steckstiften einsteckbar sind. Offenbar werden zuerst die Heizplatten in die Tragschienen eingesteckt und dann werden die mit den Heizplatten bestückten Tragschienen in den Wagen eingeschoben. Der Wagen ist nicht zur Aufnahme von Gastronorm(GN)-Behältem vorgesehen.

Aus dem DE 297 01 618 U1 ist eine modulare Grill- und/oder Kochgeräteeinheit bekannt, die eine Grill- und/oder Kochfläche hat, welche mit einer wannenförmigen Mulde als Gehäuse fest- und flüssigkeitsdicht mittels eines dauerelastischen, themperaturbeständigen Klebers verklebt ist. In das wannenförmige Gehäuse sind elektrische Stiftkontakte wasser- und flüssigkeitsdicht eingepreßt, umspritzt oder mittels Dichtmasse eingesetzt. Die Einheit wird in einen Einbaurahmen eingesetzt, der seinerseits in einer Küchenarbeitsplatte od.dgl. eingebaut ist. Der Einbaurahmen weist elektrische Steckverbindungen zu den Stiftkontakten des wannenförmigen Gehäuses auf. Diese elektrischen Steckverbindungen sind in dieser Druckschrift aber weder dargestellt noch im einzelnen beschrieben.

### DARSTELLUNG DER ERFINDUNG

Aufgabe der Erfindung ist es, einen Systemträger der eingangs genannten Art so auszubilden, daß sich Elektrogeräte leichter und platzsparender anschließen lassen, und zwar insbesondere auch dann, wenn mehrere Systemträger miteinander kombiniert werden.

Diese Aufgabe ist erfindungsgemäß durch einen Systemträger mit den im Anspruch 1 angegebenen Merkmalen gelöst.

Da bei dem Systemträger nach der Erfindung die Elektroinstallation in den Systemträger integriert ist und die Steckvorrichtung an leicht zugänglicher Stelle im bedienseitigen Bereich des Systemträgers vorgesehen ist, lassen sich Steckdose und Stecker der Steckvorrichtung auf einfache Weise ineinander stecken und voneinander trennen. Der Raum unterhalb des Systemträgers bleibt völlig frei und kann für andere Zwecke genutzt werden. Da zum Anschließen eines Elektrogerätes kein Kabel und keine Leitung mehr unter den Systemträger geführt zu werden braucht, kann dieser auch mit einem geschlossenen Boden versehen werden. Hygienevorschriften lassen sich leichter einhalten, weil der Systemträger gereinigt werden kann, ohne daß auf eine unter ihm angeordnete Elektroinstallation mit Steckdosen Rücksicht genommen zu werden braucht.

Da bei dem Systemträger nach der Erfindung die Steckvorrichtung eine an dem Systemträger nahe bei einer bedienseitigen Zugangsöffnung des Systemträgers angeordnete Steckdose aufweist, lassen sich der mit dem Elektrogerät über ein Anschlußkabel verbundene Stecker und die Steckdose auf besonders einfache und übersichtliche Weise zusammenstecken und trennen.

Da weiter bei dem Systemträger nach der Erfindung die Elektroinstallation eine Anschlußleitung für die Steckdose aufweist, die auf der von der Steckdose abgewandten Außenseite der Seitenwand (bzw. in den Zwischenräumen bei 3-, 4- und 5-fach-Systemträgern) verlegt ist, an einem Ende an die Steckdose angeschlossen ist und am anderen Ende einen Stecker oder Klemmen zum Anschluß an das Stromnetz oder an die Elektroinstallation eines benachbarten gleichen Systemträgers aufweist, läßt sich der Systemträger ebenso bequem handhaben wie jedes beliebige, mit Anschlußleitung und Stecker versehene elektrische Gerät. Insbesondere lassen sich gleiche Systemträger problemlos, d.h. ohne Behinderung durch Anschlußleitungen miteinander verbinden.

Vorteilhafte Ausgestaltungen der Erfindung bilden die Gegenstände der Unteransprüche.

Wenn in einer Ausgestaltung des Systemträgers nach der Erfindung die Steckdose an der Innenseite einer Seitenwand des Systemträgers angebracht ist, ist sie innerhalb des Systemträgers zum Herstellen der Steckverbindung leicht zugänglich.

Wenn in weiterer Ausgestaltung des Systemträgers nach der Erfindung die Steckdose versenkt in der Seitenwand des Systemträgers angeordnet ist, beansprucht sie wenig Platz.

Wenn in weiterer Ausgestaltung des Systemträgers nach der Erfindung die Steckdose in einer Vertiefung der Seitenwand so angeordnet ist, daß sie im wesentlichen der bedienseitigen Zugangsöffnung des Systemträgers zugewandt ist, ist sie nicht nur leicht zugänglich, sondern es läßt sich auch der Stecker selbst in der Vertiefung unterbringen, so daß dieser den verfügbaren Innenraum des Systemträgers und die Bedienbarkeit des Elektrogerätes nicht einschränkt.

Wenn in weiterer Ausgestaltung des Systemträgers nach der Erfindung die Anschlußleitung in einem Kanal unter dem Systemträger hindurchgeführt ist, bleibt auch bei miteinander verbundenen Systemträgem der Raum unterhalb derselben frei von störender oder Platz beanspruchender Elektroinstallation.

Wenn in weiterer Ausgestaltung des Systemträgers nach der Erfindung in Kombination desselben mit dem Elektrogerät das Anschlußkabel auf einer der vorderen Zugangsöffnung des Systemträgers benachbarten Seite aus dem Elektrogerät herausgeführt ist, läßt sich das Elektrogerät auf kürzestem Weg und auf dessen Bedienung am wenigsten behindernde Art und Weise mit der Steckdose verbinden.

Wenn in weiterer Ausgestaltung des Systemträgers nach der Erfindung an der Außenseite von wenigstens einer von zwei benachbarten Seitenwänden Versteifungsprofile zur Abstützung der Seitenwand vorgesehen sind, ist der Systemträger zum Einbau selbsttragend und es lassen sich gleiche Systemträger nicht nur auf einfache Weise mechanisch miteinander verbinden, sondern es wird bei deren Verbindung auch der für die Verlegung von Kabeln und Leitungen benötigte Raum zwischen den Seitenwänden auf einfach Weise geschaffen. In diesen Raum hinein kann auch die Seitenwand vertieft werden, die in der Vertiefung den aus der Seitenwand hervorstehenden Teil der Steckdose und einen in diese eingesteckten Stecker aufnehmen soll.

Wenn in weiterer Ausgestaltung des Systemträgers nach der Erfindung dieser mit wenigstens einem weiteren, gleichen Systemträger zu einem Mehrfachsystemträger mechanisch verbunden ist, also wenigstens zwei Systemträger eine Einheit bilden, stehen dem Koch bei einfacher Handhabbarkeit mehr Kombinationsmöglichkeiten zur Verfügung. Während der eine Systemträger zum Kochen hergerichtet ist, kann der andere Systemträger zum Warmoder Kühlhalten hergerichtet sein. Wenn drei Systemträger zu einer Einheit zusammengefaßt sind, hat der Koch die Möglichkeit, seine Elektrogeräte in den Systemträgern so einzusetzen, daß gleichzeitig gekocht, warmgehalten und kühlgehalten werden kann.

Wenn in einer Ausgestaltung des Mehrfachsystemträgers nach der Erfindung die Elektroinstallationen der einzelnen Systemträger desselben zusammengeschaltet und mit einer einzelnen oder gemeinsamen Anschlußleitung zum Anschluß an das Stromnetz versehen sind, braucht lediglich ein Stecker in eine Steckdose des Stromnetzes eingesteckt zu werden, um die Stromversorgung des Mehrfachsystemträgers herzustellen.

Wenn in weiterer Ausgestaltung des Mehrfachsystemträgers nach der Erfindung dessen einzelne Systemträger an ihrer Oberseite dicht mit einem dreiseitigen Auflagerand verbunden sind, der als Auflage und Abdichtung zum Einbau in eine Kocheinheit dient, können keine Speisen zwischen benachbarte Systemträger und auch nicht zu Anschlußleitungen, die zwischen benachbarten Systemträgern verlegt sind, gelangen, so daß hygienische und elektrische Probleme vermieden werden. Zum dichten Miteinanderverbinden der Systemträger kann eine Dichtung zwischen denselben, eine gemeinsame Abdeckung über denselben oder eine "nahtlose" Verbindung zwischen denselben vorgesehen sein.

Ausführungsbeispiele der Erfindung werden im folgenden unter Bezugnahme auf die Zeichnungen näher beschrieben. Es zeigt:

### KURZE BESCHREIBUNG DER ZEICHNUNGEN

- Fig. 1: in Draufsicht einen aus zwei Systemträgern nach der Erfindung aufgebauten Mehrfachsystemträger,
- Fig. 2: eine Vorderansicht des Mehrfachsystemträgers nach Fig. 1, dargestellt ohne Frontklappen,
- Fig. 3: eine Längsschnittansicht des Mehrfachsystemträgers nach der Linie III-III in Fig. 1,
- Fig. 4: in Draufsicht einen Zweifachsystemträger und
- Fig. 5: in Draufsicht einen Dreifachsystemträger.

### BESTER WEG ZUR AUSFÜHRUNG DER ERFINDUNG

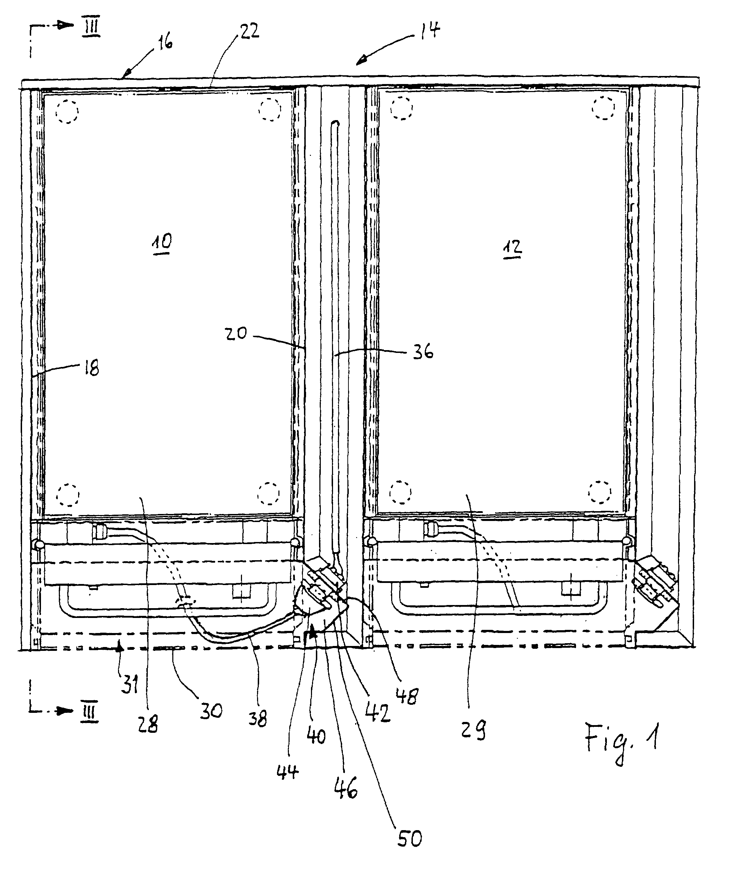

Fig. 1 zeigt zwei Systemträger 10, 12, die zu einem insgesamt mit 14 bezeichneten Mehrfachsystemträger mechanisch und elektrisch miteinander verbunden sind. Die beiden Systemträger 10, 12 haben den gleichen Aufbau, weshalb im folgenden lediglich der Systemträger 10 im einzelnen beschrieben wird. Zusätzlich wird dann gesondert die Art der mechanischen und elektrischen Verbindung der beiden Systemträger 10, 12 beschrieben.

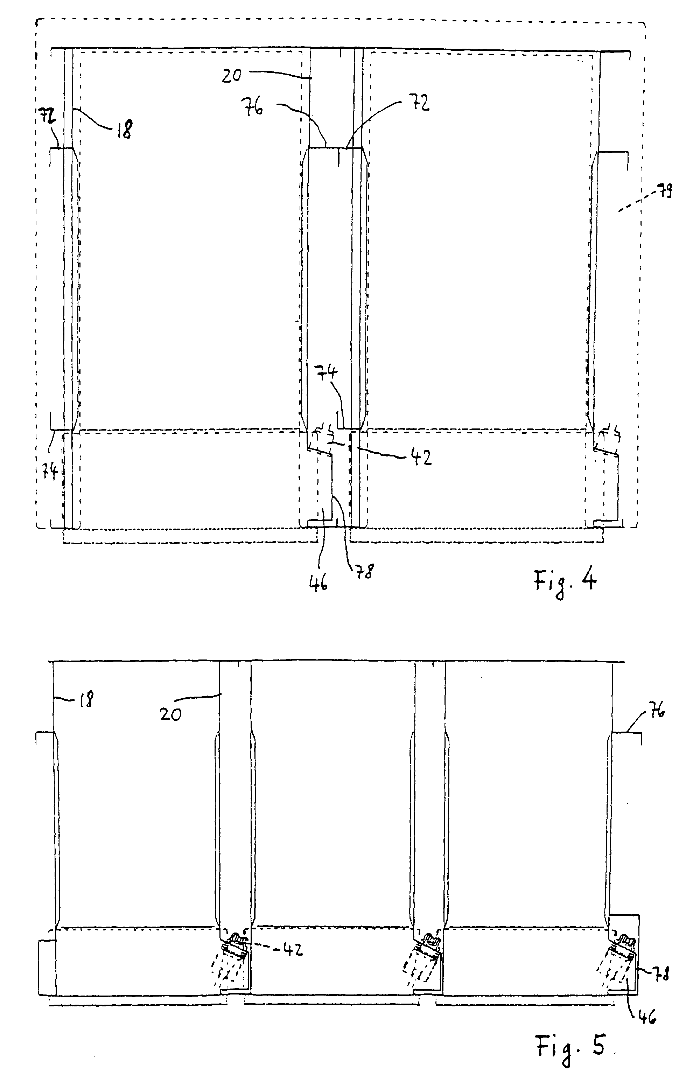

Bei den in den Fig. 1 bis 3 und in Fig. 4 dargestellten Ausführungsbeispielen besteht der Mehrfachsystemträger 14 zwar lediglich aus zwei Systemträgem, es können jedoch drei (dargestellt in Fig. 5), vier oder noch mehr Systemträger zu einem Mehrfachsystemträger kombiniert werden. Mit der Zahl der einzelnen Systemträger, die zu einem Mehrfachsystemträger kombiniert werden, steigt die Zahl der Einsatzmöglichkeiten desselben. Es lassen sich so beliebig große Ausgabe- und Kocheinheiten zusammenstellen.

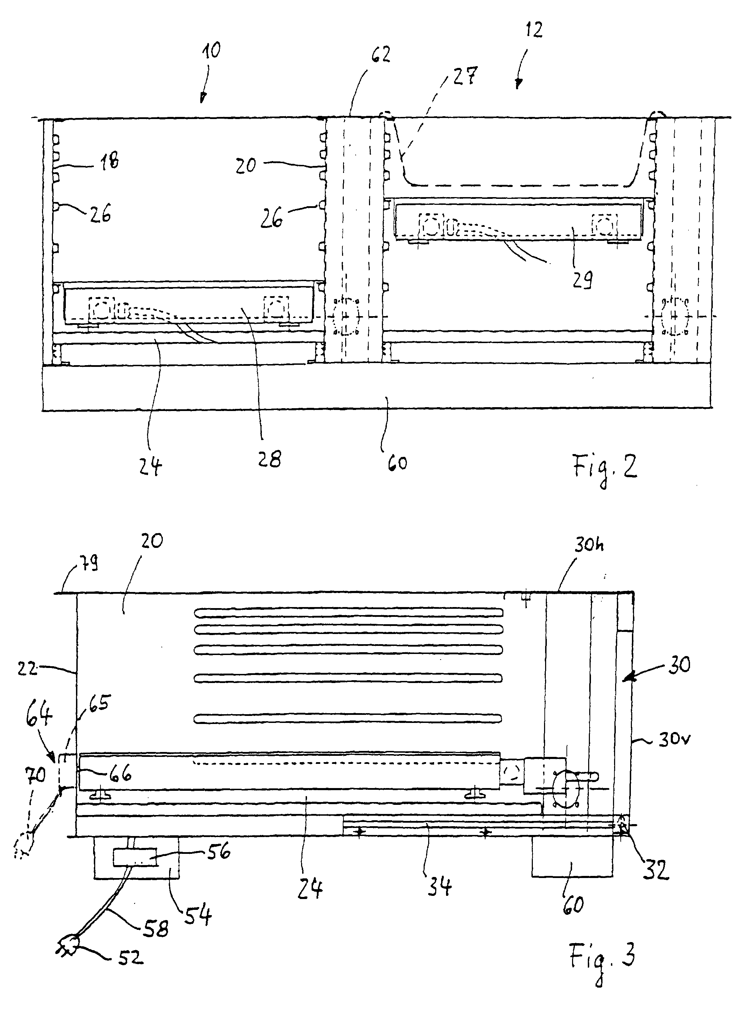

Der Systemträger 10 hat ein Gehäuse 16 aus nichtrostendem Stahl. Das Gehäuse 16 hat zwei benachbarte Längs- oder Seitenwände 18, 20 und eine Rückwand 22. Es ist also dreiseitig geschlossen. Das Gehäuse 16 ist oben offen und unten durch einen Boden 24 verschlossen, wie es in den Fig. 2 und 3 zu erkennen ist. Die Größe der Öffnung des Gehäuses 16 an der Oberseite desselben entspricht GN 1/1. In die Seitenwände 18, 20 sind nach innen vorstehende Sicken 26 zur Aufnahme eines von der Bedienseite des Gehäuses 16 her einschiebbaren Elektrogerätes 28 eingeprägt. In dem in den Fig. 1 bis 3 dargestellten Ausführungsbeispiel ist das Elektrogerät eine Elektroplatte, konzipiert als ein Koch-, Warmhalte- oder Kühlgerät, also beispielsweise als ein Ceran- oder Induktionskochfeld, eine Grillplatte, eine Warmhalteplatte oder eine Kühleinheit. Die Sicken 26 sind in unterschiedlichen Abständen übereinander angeordnet. Die Abstände der Sicken 26 sind so ausgeführt, daß bei den handelsüblichen GN-Behälter-Tiefen 20, 40, 65, 100, 150 und 200 mm zwischen einem GN-Behälter 27, der in den Systemträger 10 von oben eingesetzt wird und auf der Oberseite des Gehäuses 16 mit seinem Rand aufliegt, und einem als Warmhalte- oder Kühlplatte ausgebildeten Elektrogerät 28 jeweils ein optimaler Abstand, je nach Behältertiefe, gewährleistet ist. Auf der Bedienungsseite (in der Darstellung in Fig. 1 unten und in Fig. 3 rechts) weist der Systemträger 10 eine Frontklappe 30 auf. Die Frontklappe 30 hat im geschlossenen Zustand, der in Fig. 3 gezeigt ist, einen vertikalen Teil 30v und einen horizontalen Teil 30h. Die Frontklappe 30 ist an einer bedienseitigen Zugangsöffnung 31 des Gehäuses 16 mit einem Gelenk 32 an dem Gehäuse so angebracht, daß sie nach unten geklappt werden kann. Unter dem Boden 24 ist ein Kanal 34 vorgesehen, in den der vertikale Teil 30v, sobald er um 90° nach unten geklappt worden ist, eingeschoben werden kann. Bei nach unten geklappter Frontklappe 30 lassen sich der GN-Behälter 27 und ein Elektrogerät 28 von der Frontseite her in den Systemträger 10 einschieben oder von oben her in den Systemträger einsetzen. Die Höhe, in welcher das Elektrogerät 28 angeordnet wird, ist dabei wählbar, wie es in Fig. 2 angedeutet ist.

In den Systemträger 10 ist eine Elektroinstallation integriert, hier teilweise dargestellt durch eine Anschlußleitung 36, die zur Stromversorgung des Elektrogerätes 28 an das Stromnetz (nicht dargestellt) anschließbar ist. Die Verbindung zwischen dem Elektrogerät 28 und der Anschlußleitung 36 erfolgt über eine insgesamt mit 40 bezeichnete Steckvorrichtung, die an der Bedienseite des Systemträgers 10, also an einer leicht zugänglichen Stelle desselben vorgesehen ist. Die Steckvorrichtung 40 weist eine an dem Systemträger 10 vorgesehene Steckdose 42 zum Einstecken eines mit dem Elektrogerät 28 über ein Anschlußkabel 38 verbundenen Steckers 44 auf.

Die Seitenwand 20 des Gehäuses 16 ist mit einer Vertiefung 46 versehen. Die Vertiefung 46 erstreckt sich über die gesamte Höhe der Seitenwand 20. Die Vertiefung ist in die Seitenwand 20 so eingeformt, daß sie im Querschnitt rechtwinkelig oder schräg abgewinkelt ist, wie es in Fig. 1 bzw. 4 und 5 zu erkennen ist. Die Vertiefung 46 hat so zwei zueinander winkelig angeordnete Begrenzungswände 48, 50. In dem in Fig. 2 und 3 unteren Ende der Begrenzungswand 48 ist ein Loch gebildet, in welchem die Steckdose 42 befestigt ist, wie es in den Fig. 1, 4 und 5 zu erkennen ist, so daß die Steckdose der bedienseitigen Zugangsöffnung 31 des Gehäuses 16 des Systemträgers 10, die durch die Frontklappe 30 verschließbar ist, zugewandt ist. Die Steckdose 42 ist auf diese Weise versenkt in der Seitenwand 20 des Systemträgers 10 angeordnet. Ebenso ist der in die Steckdose 42 eingesteckte Stecker 44 in der Vertiefung 46 versenkt angeordnet, so daß das Elektrogerät 28 bei eingestecktem Stecker aus dem Systemträger 10 herausgezogen und in anderer Höhe wieder eingeschoben werden kann. Die Länge des Anschlußkabels 38 ist für diesen Fall entsprechend bemessen.

Die Anschlußleitung 36 für die Steckdose 42 ist auf der von der Steckdose 42 abgewandten Außenseite der Seitenwand 20 verlegt, wie es in Fig. 1 nur für den Systemträger 10 dargestellt ist. Die Anschlußleitung 36 ist an einem Ende an die Steckdose 42 angeschlossen und hat am anderen Ende einen Stecker 52 oder Klemmen (nicht dargestellt) zum Anschluß an das Stromnetz oder an die Elektroinstallation eines benachbarten gleichen Systemträgers. Die Anschlußleitung 36 ist in einem Kanal 54 unter dem Systemträger 10 hindurchgeführt. In dem dargestellten Ausführungsbeispiel ist die Anschlußleitung (nicht dargestellt) der Steckdose des Systemträgers 12 mit der Anschlußleitung 36 des Systemträgers 10 zusammengeschaltet, wie an einer Stelle 56 angedeutet, so daß eine von der Stelle 56 aus weiterführende Leitung 58 eine gemeinsame Anschlußleitung zum Anschließen des dargestellten Zweifachsystemträgers an das Stromnetz darstellt.

Das Anschlußkabel 38 des Elektrogerätes 28 ist auf einer der bedienseitigen Zugangsöffnung 31 des Systemträgers 10 benachbarten Seite aus dem Elektrogerät herausgeführt.

In dem dargestellten Ausführungsbeispiel sind die beiden Systemträger 10, 12 unten durch den Kanal 54 und einen Kanal 60 und oben durch eine gemeinsame Abdeckung 62 (Fig. 2) mechanisch miteinander verbunden, beispielsweise verschweißt. Sie bilden so eine unlösbare Einheit. Alternativ könnte die mechanische Verbindung zwischen den Systemträgereinheiten aber auch lösbar ausgebildet sein. Die Verbindung sollte auf jeden Fall so hergestellt werden, daß die einzelnen Systemträger an ihrer Oberseite dicht miteinander verbunden sind.

In Fig. 3 ist links eine alternative Ausführungsform der Steckvorrichtung 40 gestrichelt angedeutet und insgesamt mit 64 bezeichnet. Die Steckvorrichtung 64 besteht aus mehreren in der Rückwand 22 vorgesehenen Steckvorrichtungen 64 (nur eine ist dargestellt) und aus Steckkontaktstiften 66, die an der Rückseite des Elektrogeräts 28 vorgesehen sind. Wenn das Elektrogerät 28 in den Systemträger 10 eingeschoben wird, gelangen die Steckkontaktstifte am Ende in entsprechende Steckbuchsen in der Steckdose 65. Von der Steckdose 65 führt eine Anschlußleitung 68 zu einem Stecker 70. Die Steckdosen 65 könnten wiederum an der Stelle 56 zusammengeschaltet sein, so daß auch bei der alternativen Ausführungsform die Leitung 58 die gemeinsame Anschlußleitung eines Mehrfachsystemträgers bilden würde.

Die Fig. 4 und 5 zeigen in Draufsicht einen Zweifach- bzw. Dreifachsystemträger. Insbesondere sind außen an den Längs- oder Seitenwänden 18, 20 vorgesehene Versteifungsprofile 72, 74, 76 und 78 zu erkennen. Das Versteifungsprofil 78 wird durch die nach außen verformte Seitenwand 20 gebildet. Diese Versteifungsprofile machen den einzelnen Systemträger zum Einbau selbsttragend, erleichtern das mechanische Miteinanderverbinden von gleichen Systemträgern und schaffen durch gegenseitige Abstützung Raum für die Verlegung von Anschlußleitungen wie der Anschlußleitung 36 nach Fig. 1. Ein dreiseitiger Auflagerand 79 dient als Auflage und Abdichtung zum Einbau in die jeweilige Kocheinheit.

## Patentansprüche

1. Systemträger zur Aufnahme von wenigstens einem GN-Behälter (27) und von wenigstens einem als einsetz- oder einschiebbares Elektrogerät (28) konzipierten Kochgerät (z.B. Ceran- oder Induktionskochfeld, Grillplatte), Warmhalte- oder Kühlgerät, das mit den Abmessungen des GN-Behälters entsprechenden Außenabmessungen versehen ist, in dem Systemträger (10) in wählbarer Höhe anbringbar ist und durch Einstecken eines mit dem Elektrogerät (28) über ein Anschlußkabel (38) verbundenen Steckers (44) in eine Steckvorrichtung (40) an eine Elektroinstallation (36, 42) anschließbar ist, die zur Stromversorgung des Elektrogerätes (28) an das Stromnetz anschließbar ist wobei die Elektroinstallation (36, 42) in den Systemträger (10) integriert ist, **dadurch gekennzeichnet, daß** die Steckvorrichtung (40) an leicht zugänglicher Stelle im bedienseitigen Bereich des Systemträgers (10) vorgesehen ist, daß die Steckvorrichtung (40) eine an dem Systemträger (10) vorgesehene Steckdose (42) aufweist, die nahe bei einer bedienseitigen Zugangsöffnung (31) des Systemträgers (10) angeordnet ist, daß die Elektroinstallation (36, 42) eine Anschlußleitung (36) für die Steckdose (42) aufweist, die auf der von der Steckdose (42) abgewandten Außenseite einer Seitenwand (20) verlegt ist, an einem Ende an die Steckdose (42) angeschlossen ist und am anderen Ende einen Stekker (52) oder Klemmen zum Anschluß an das Stromnetz oder an die Elektroinstallation eines benachbarten gleichen Systemträgers aufweist.

2. Systemträger nach Anspruch 1, **dadurch gekennzeichnet, daß** die Steckdose (42) an der Innenseite der Seitenwand (20) des Systemträgers (10) angebracht ist.

3. Systemträger nach Anspruch 2, **dadurch gekennzeichnet, daß** die Steckdose (42) versenkt in der Seitenwand (20) des Systemträgers (10) angeordnet ist.

4. Systemträger nach Anspruch 3, **dadurch gekennzeichnet, daß** die Steckdose (42) in einer Vertiefung (46) der Seitenwand (20) so angeordnet ist, daß sie im wesentlichen der vorderen Zugangsöffnung (31) des Systemträgers (10) zugewandt ist.

5. Systemträger nach einem der Ansprüche 1 bis 4, **dadurch gekennzeichnet, daß** die Anschlußleitung (36) in einem Kanal (54) unter dem Systemträger (10) hindurchgeführt ist.

6. Systemträger nach einem der Ansprüche 1 bis 5 in Kombination mit dem Elektrogerät (28), **dadurch gekennzeichnet, daß** das Anschlußkabel (38) auf einer der vorderen Zugangsöffnung (31) des Systemträgers (10) benachbarten Seite aus dem Elektrogerät (28) herausgeführt ist.

7. Systemträger nach einem der Ansprüche 1 bis 6, **gekennzeichnet durch** an der Außenseite von wenigstens einer von zwei benachbarten Seitenwänden (18, 20) vorgesehenen Versteifungsprofilen (72, 74, 76, 78) zur Abstützung der Seitenwand.

8. Mehrfachsystemträger, **dadurch gekennzeichnet, daß** ein Systemträger (10) nach einem der Ansprüche 1 bis 7 mit wenigstens einem weiteren, gleichen Systemträger (12) mechanisch verbunden ist

9. Mehrfachsystemträger nach Anspruch 8, **dadurch gekennzeichnet, daß** die Elektroinstallationen (36, 42) der einzelnen Systemträger (10, 12) entweder zusammengeschaltet und mit einer gemeinsamen Anschlußleitung (58) zum Anschluß an das Stromnetz versehen sind oder einzeln an das Stromnetz anschließbar sind.

10. Mehrfachsystemträger nach Anspruch 8 oder 9, **dadurch gekennzeichnet, daß** die einzelnen Systemträger (10, 12) an ihrer Oberseite dicht mit einem dreiseitigen Auflagerand (79) verbunden sind, der als Auflage und Abdichtung zum Einbau in eine Kocheinheit dient.

## Claims

1. A system carrier for the accommodation of at least one gastronorm (GN) container (27) and of at least one cooking device (such as a Ceran or induction cooktop or a grill plate) or warming or cooling device designed as a slidable or insertable electrical device (28) with outer dimensions corresponding to those of the GN-container, capable of attachment to the system carrier (10) at a selectable level, and further capable of connection to an electrical installation (36, 42) by plugging a plug (44) connected through a cable (38) to the electric device (28) into a plug means (40), the electrical installation (36, 42) being capable of connection to the mains for supplying power to the electrical device (28) and also being integrated into the system carrier (10), **characterized in that** the plug means (40) is provided at an easily accessible location in the region on the operator side of the system carrier (10), that the plug means (40) has a socket (42) provided on the system carrier (10) and arranged near an access opening (31) on the operator side of the system carrier (10), that the electrical installation (36, 42) has a connecting lead (36) for the socket (42), the connecting lead being laid on the outer side of a side wall (20) facing away from the socket (42), the connecting lead further being connected at one end to the socket (42) and at the other end having a plug (52) or terminals for connection to the mains or to the electrical installation of an adjacent similar system carrier.

2. The system carrier according to claim 1, **characterized in that** the socket (42) is mounted on the inner side of the side wall (20) of the system carrier (10).

3. The system carrier according to claim 2, **characterized in that** the socket (42) is embedded in the side wall (20) of the system carrier (10).

4. The system carrier according to claim 3, **characterized in that** the socket (42) is arranged in a recess (46) in the side wall (20) in such a manner that it substantially faces toward the front access opening (31) of the system carrier (10).

5. The system carrier according to any one of claims 1 to 4, **characterized in that** the connecting line (36) is guided through a conduit (54) beneath the system carrier (10).

6. The system carrier according to any one of claims 1 to 5 in combination with the electrical device (28), **characterized in that** the connecting cable (38) exits the electrical device (28) on the side adjoining the front access opening (31) of the system carrier (10).

7. The system carrier according to any one of claims 1 to 6, **characterized by** reinforcement profiles (72, 74, 76, 78) provided on the exterior of at least one of two adjacent side walls (18, 20) for supporting the side wall.

8. A multiple system carrier **characterized in that** a system carrier (10) according to any one of claims 1 to 7 is mechanically connected to at least one additional, similar system carrier (12).

9. The multiple system carrier according to claim 8, **characterized in that** the electrical installations (36, 42) of the individual system carriers (10, 12) are either interconnected and provided with one common connecting line (58) for connection to the mains, or they can be individually connected to the mains.

10. The multiple system carrier according to claim 8 or 9, **characterized in that** the individual system carriers (10, 12) are tightly connected at their tops by a three-sided support edge (79) serving as supporting and sealing means for installation in a cooking unit.

## Revendications

1. Porte-système permettant de loger au moins un récipient de cuisson (27) et au moins un réchaud (par exemple, plaque de cuisson à induction ou à céramique, grille), appareil de maintien à température ou appareil de refroidissement conçu en tant qu'appareil électroménager (28) à insérer ou à intercaler et doté de dimensions extérieures correspondant aux dimensions du récipient de cuisson, pouvant être placé au choix à différentes hauteurs à l'intérieur du porte-système (10) et pouvant être connecté, par introduction dans un dispositif de raccordement (40), d'une prise mâle reliée à l'appareil électroménager (28) par l'intermédiaire d'un câble d'alimentation (38), à une installation électrique (36, 42) pouvant être à son tour connectée au secteur pour l'alimentation électrique de l'appareil électroménager (28), où l'installation électrique (36, 42) est intégrée au porte-système (10), **caractérisé en ce que** le dispositif de raccordement (40) est prévu à un endroit facilement accessible dans la zone côté service du porte-système (10), **en ce que** le dispositif de raccordement (40) présente, au niveau du porte-système (10), une prise femelle (42) placée à proximité d'une ouverture d'accès (31), côté service, du porte-système (10), **en ce que** l'installation électrique (36, 42) présente une ligne de raccordement (36) pour la prise femelle (42) acheminée sur la face extérieure, opposée à la prise femelle (42), d'une paroi (20), raccordée, à une extrémité, à la prise femelle (42) et présentant, à l'autre extrémité, une prise mâle (52) ou des bornes de connexion permettant le raccordement au réseau ou à l'installation électrique d'un même porte-système attenant.

2. Porte-système selon la revendication 1, **caractérisé en ce que** la prise femelle (42) est placée sur la face intérieure de la paroi (20) du porte-système (10).

3. Porte-système selon la revendication 2, **caractérisé en ce que** la prise femelle (42) est encastrée dans la paroi (20) du porte-système (10).

4. Porte-système selon la revendication 3, **caractérisé en ce que** la prise femelle (42) est placée dans une cavité (46) de la paroi (20) de façon à se trouver fondamentalement tournée vers l'ouverture d'accès avant (31) du porte-système (10).

5. Porte-système selon l'une des revendications 1 à 4 **caractérisé en ce que** la ligne de raccordement (36) passe à l'intérieur d'un canal (54) sous le porte-système (10).

6. Porte-système selon l'une des revendications 1 à 5 combiné à l'appareil électroménager (28), **caractérisé en ce que**, le câble d'alimentation (38) part de l'appareil électroménager (28) par l'un des côtés attenants à l'ouverture d'accès (31) du porte-système (10).

7. Porte-système selon l'une des revendications 1 à 6, **caractérisé par** des profilés de renfort (72, 74, 76, 78), prévus au niveau de la face extérieure d'au moins l'une des deux parois attenantes (18, 20) servant à étayer la paroi.

8. Porte-système multiple, **caractérisé en ce qu'**un porte-système (10) selon l'une des revendications 1 à 7 est mécaniquement relié à au moins un autre porte-système identique (12).

9. Porte-système multiple selon la revendication 8, **caractérisé en ce que** les installations électriques (36, 42) des porte-systèmes individuels (10, 12) sont, soit interconnectées et dotées d'une ligne de raccordement commune (58) pour le raccordement au secteur, soit peuvent être individuellement raccordées au secteur.

10. Porte-système multiple selon la revendication 8 ou 9, **caractérisé en ce que** les porte-systèmes individuels (10, 12) sont rassemblés de façon hermétique au niveau de leur face supérieure par un rebord d'appui à trois côtés (79) à encastrer sur une unité de cuisson pour servir d'appui et de fermeture étanche.
